(19) **Europäisches Patentamt**
**European Patent Office**
**Office européen des brevets**

(11) **EP 4 664 237 A1**

(12) **EUROPEAN PATENT APPLICATION**
published in accordance with Art. 153(4) EPC

(43) Date of publication:
**17.12.2025 Bulletin 2025/51**

(21) Application number: **24788890.2**

(22) Date of filing: **22.02.2024**

(51) International Patent Classification (IPC):
**G06F 1/16** (2006.01)    **H04M 1/02** (2006.01)
**G09F 9/30** (2006.01)

(52) Cooperative Patent Classification (CPC):
**G06F 1/16; G09F 9/30; H04M 1/02**

(86) International application number:
**PCT/KR2024/002317**

(87) International publication number:
**WO 2024/214946 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023 KR 20230048987**

(71) Applicant: **Samsung Electronics Co., Ltd.
Suwon-si, Gyeonggi-do 16677 (KR)**

(72) Inventors:
- **NGO, Van Thang**
  **Suwon-si, Gyeonggi-do 16677 (KR)**
- **BUI, Dac Tri**
  **Suwon-si, Gyeonggi-do 16677 (KR)**
- **HOANG, Van Quan**
  **Suwon-si, Gyeonggi-do 16677 (KR)**
- **NGUYEN, Dinh Quynh**
  **Suwon-si, Gyeonggi-do 16677 (KR)**
- **TRAN, Ba Phuc**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE**

(57)     An electronic device according to an embodiment may include a display protective film disposed on a front surface of a flexible display panel, the display protective film including a main portion extending along a plane of the flexible display panel and a pair of protrusions respectively extending from both lateral surfaces of the main portion.

FIG. 8

EP 4 664 237 A1

## Description

## Technical Field

Embodiments relate to a foldable electronic device including a display protective film.

## Background Art

With the advancement of digital technology, various types of electronic devices such as mobile communication terminals, smartphones, tablet personal computers (PCs), personal digital assistants (PDAs), electronic notebooks, notebooks, and wearable devices have been widely used.

Recently, electronic devices with improved portability due to a foldable structure allowing the electronic devices to be folded to have a smaller size have been released. Such a foldable electronic device may have two housing members connected to each other by a foldable hinge structure. The hinge structure allows the foldable electronic device to be folded inward or outward.

## Disclosure of Invention

## Solution to Problem

An electronic device according to an embodiment may include a first housing, a second housing that is coupled to the first housing to be pivotable about an axis, a hinge portion connecting the first housing to the second housing, a flexible display panel mounted across the first housing and the second housing, the flexible display panel including a bending zone disposed with a predetermined width from a folding line (FL) disposed in a first direction parallel to a hinge axis of the hinge portion, a pair of protective caps arranged on both ends of the hinge portion, respectively, and a display protective film disposed on a front surface of the flexible display panel.

The display protective film may include a main portion extending along a plane of the flexible display panel and a pair of protrusions respectively extending from both lateral surfaces of the main portion toward the pair of protective caps.

## Brief Description of Drawings

FIG. 1 is a perspective view of an electronic device according to an embodiment.
FIG. 2 is an exploded perspective view of an electronic device according to an embodiment.
FIG. 3A is a side view showing an unfolded state of a flexible display module including a support panel according to an embodiment, and FIG. 3B is a side view showing a bent state of the flexible display module including the support panel according to an embodiment.
FIG. 4 is a perspective view of a decorative member according to an embodiment.
FIG. 5 is a perspective view of a protective cap according to an embodiment.
FIG. 6A is a perspective view of a dust cover member according to an embodiment, and FIG. 6B is a bottom plan view of the dust cover member according to an embodiment.
FIG. 7 is an exploded perspective view of an electronic device according to an embodiment.
FIG. 8 is a plan view of a protective film according to an embodiment.
FIG. 9 is a partial magnified view of an electronic device according to an embodiment in an unfolded state.
FIG. 10 is a cross-sectional view of an electronic device according to an embodiment.
FIG. 11 is a cross-sectional view of an electronic device including a reinforcing layer according to an embodiment.
FIG. 12A is a perspective view showing a shape in which a dust cover member is not tilted in a bent state of an electronic device according to an embodiment, FIG. 12B is a side view, and FIG. 12C is a front view.
FIG. 13A is a perspective view showing a shape in which a dust cover member is not tilted in a bent state of an electronic device according to an embodiment, FIG. 13B is a side view, and FIG. 13C is a front view.
FIG. 14 is a partial magnified view of an electronic device when a dent region has a predetermined open angle, according to an embodiment.
FIGS. 15A and 15B illustrate shapes of protrusions according to a shape of a dust cover member when a dent region has a predetermined open angle, according to an embodiment.
FIG. 16 is a partial magnified view of an electronic device in which a concave portion is disposed on a second member of a dust cover member, according to an embodiment.
FIGS. 17A and 17B illustrate shapes of protrusions according to a shape of a dust cover member when a concave portion is disposed on the dust cover member, according to an embodiment.
FIGS. 18 and 19 are partial magnified views of electronic devices including dent regions of various shapes according to an embodiment.
FIGS. 20 through 22 are partial magnified views of electronic devices including second regions of various shapes disposed in a protrusion according to an embodiment.

## Mode for the Invention

Reference will now be made in detail to embodiments, examples of which are illustrated in the accompanying drawings. Like reference numerals or characters in the drawings denote like parts or components.

While such terms as "first", "second", etc., may be used to describe various components, such components must not be limited to the above terms. The above terms are used only to distinguish one component from another. For example, a first component discussed below could be termed a second component, and similarly, a second component may be termed a first component, without departing from the teachings of this disclosure. The term "and/or" includes any and all combinations of one or more of the associated listed items.

The terms used in the present specification are merely used to describe embodiments, and are not intended to limit the inventive concept. An expression used in the singular encompasses the expression of the plural, unless it has a clearly different meaning. In the present specification, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. Like reference numerals in the drawings denote like elements performing substantially the same function.

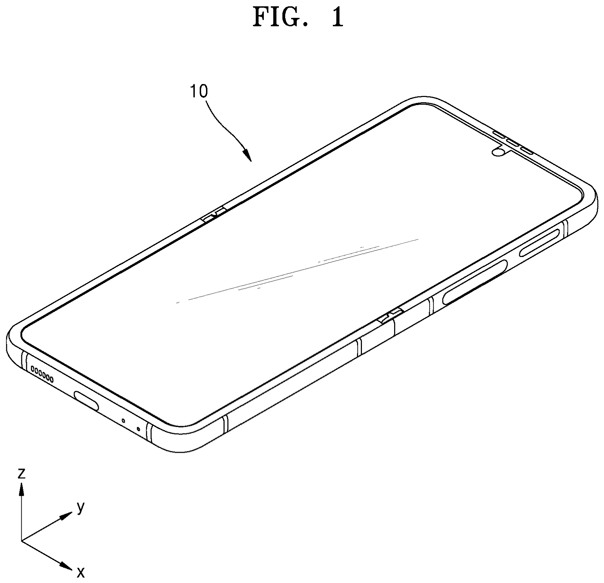

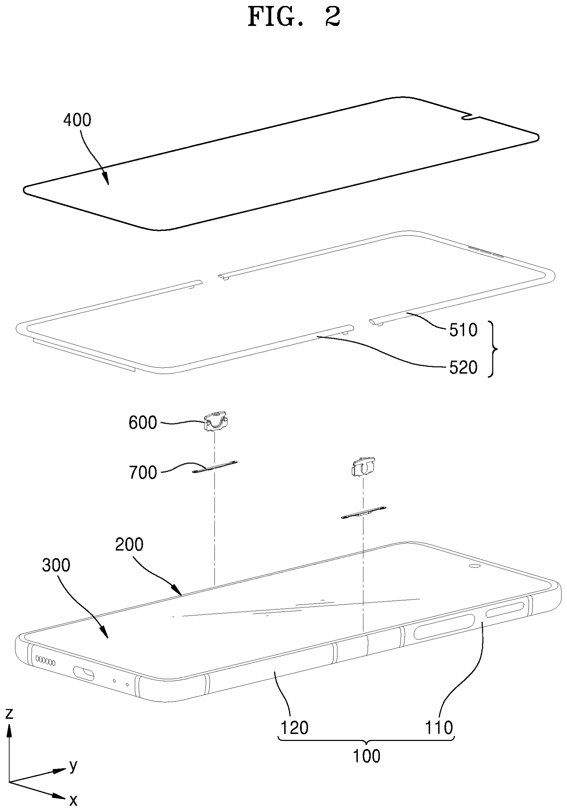

FIG. 1 is a perspective view of an electronic device 10 according to an embodiment, and FIG. 2 is an exploded perspective view of the electronic device 10 according to an embodiment.

The electronic device 10 according to an example may be at least one of various types of electronic products including flexible displays. For example, the electronic device may include a mobile phone as illustrated. In FIG. 1, the electronic device 10 is illustrated as a mobile phone that is folded about an X-axis. However, the present disclosure is not limited thereto, and the electronic device 10 may be implemented as a mobile phone that is folded about a Y-axis. However, the following description assumes that the electronic device 10 is implemented as a mobile phone that is folded about the X-axis.

Referring to FIGS. 1 and 2, the electronic device 10 may include a housing 100, a hinge part 200, a flexible display module 300, a display protective film 400, a decorative member 500, a protective cap 600, and a dust cover member 700.

The housing 100 of the electronic device 10 according to an example may form at least a portion of an exterior of the electronic device 10, and may be configured to accommodate various components of the electronic device 10 therein.

The housing 100 may include a plurality of housing members. For example, the housing 100 may include a first housing 110 and a second housing 120. The first housing 110 and the second housing 120 may be shaped such that they are symmetrical to each other, but are not necessarily limited thereto. For example, the first housing 110 and the second housing 120 may have different shapes.

The first housing 110 and the second housing 120 may be coupled to be pivotable about one axis relative to each other. For example, the first housing 110 and the second housing 120 may be connected to each other via the hinge part 200 and may be coupled to be pivotable about one axis relative to each other.

Locations of the first housing 110 and the second housing 120 may be changed to be between an unfolded location and a folded location. The unfolded location may refer to a state in which the first housing 110 and the second housing 120 are fully unfolded, for example, a location in which an angle formed by the first housing 110 and the second housing 120 is approximately 180 degrees. The folded location may refer to a state in which the first housing 110 and the second housing 120 are fully folded, for example, a location in which an angle formed by the first housing 110 and the second housing 120 is approximately 0 degrees.

The flexible display module 300 may be disposed on a front surface of the first housing 110 and the second housing 120. For example, the flexible display module 300 may be mounted across the first housing 110 and the second housing 120, and may be arranged to bend between the first housing 110 and the second housing 120. A configuration and function of the flexible display module 300 will be described later.

In one example, the first housing 110 and the second housing 120 may include a first rear housing (not shown) and a second rear housing (not shown) supporting their respective rear sides, respectively. Components of the electronic device 10 may be mounted inside the first housing 110 formed between the first housing 110 and the first rear housing, and inside the second housing 120 formed between the second housing 120 and the second rear housing, respectively. However, structures of the first rear housing and the second rear housing are not limited thereto, and the first rear housing may be formed integrally with the first housing 110, and the second rear housing may be formed integrally with the second housing 120.

Components of the electronic device 10 may be mounted inside the first housing 110 and the second housing 120. For example, a first printed board assembly (PBA) and a first battery may be mounted inside the first housing 110, a second PBA and a second battery may be mounted inside the second housing 120, and a CTC cable may be arranged across the first housing 110 and the second housing 120. Here, the first PBA and the second PBA may include a printed circuit board, a switch, an input/output port connector, and the like. In addition, the CTC cable may electrically connect a first printed circuit board arranged in the first housing 110 to a second printed circuit board arranged in the second housing 120, and at least a portion of the CTC cable may be arranged inside the hinge part 200 in a state of being bent at a predetermined angle according to an internal shape of the hinge part 200 that will be described below. The first housing 110 and the second housing 120 may support various components of the electronic device 10 mounted inside such that they do not interfere with the flexible display module 300 mounted on the front surface of the electronic device 10.

In one example, a first rear cover (not shown) may be further placed on a rear surface of the first housing 110, and a second rear cover (not shown) may be further placed on a rear surface of the second housing 120. The first rear cover and the second rear cover may cover the rear surfaces of the first housing 110 and the second housing 120, respectively, to cover the components placed inside. For example, the first rear cover may fix and support one or more cameras (not shown) arranged in the first housing 110. The first rear cover and the second rear cover may constitute a portion of the exterior of the electronic device 10.

The hinge part 200 of the electronic device 10 according to an example may be disposed between the first housing 110 and the second housing 120. The hinge part 200 may connect the first housing 110 to the second housing 120 so that the second housing 120 may rotate about one axis with respect to the first housing 110. The first housing 110 and the second housing 120 may pivot about one axis by the hinge part 200 to control unfolding and folding of the electronic device 10.

The hinge part 200 may limit a pivot angle so that the first housing 110 and the second housing 120 may pivot until an angle between the first housing 110 and the second housing 120 becomes a predetermined angle. For example, the hinge part 200 may limit the pivot angle between the first housing 110 and the second housing 120 to 180 degrees, thereby limiting the pivot angle between the first housing 110 and the second housing 120 so that the first housing 110 and the second housing 120 do not pivot beyond a fully unfolded state (i.e., a state in which the angle formed by the first housing 110 and the second housing 120 is 180 degrees).

In one example, the hinge part 200 may have a hollow space formed therein, and at least a portion of the CTC cable may be placed in the hollow space.

The flexible display module 300 of the electronic device 10 according to an example includes a flexible display panel 310 and a support panel 330. The flexible display module 300 may be disposed across the first housing 110 and the second housing 120.

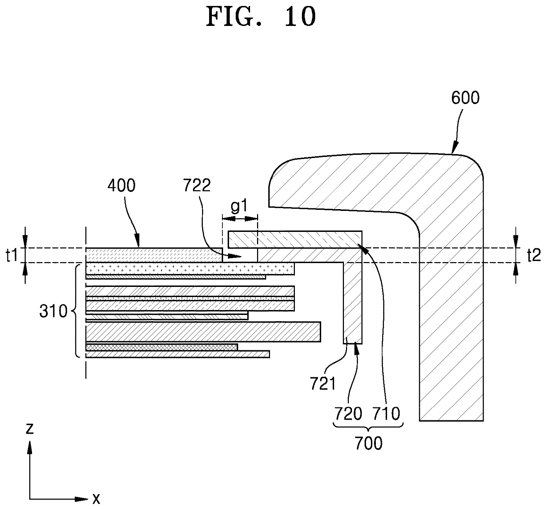

The flexible display panel 310 may display an image and may include a plurality of layers (see FIG. 10).

The support panel 330 may include a first support panel 331 and a second support panel 332, and may support the flexible display panel 310.

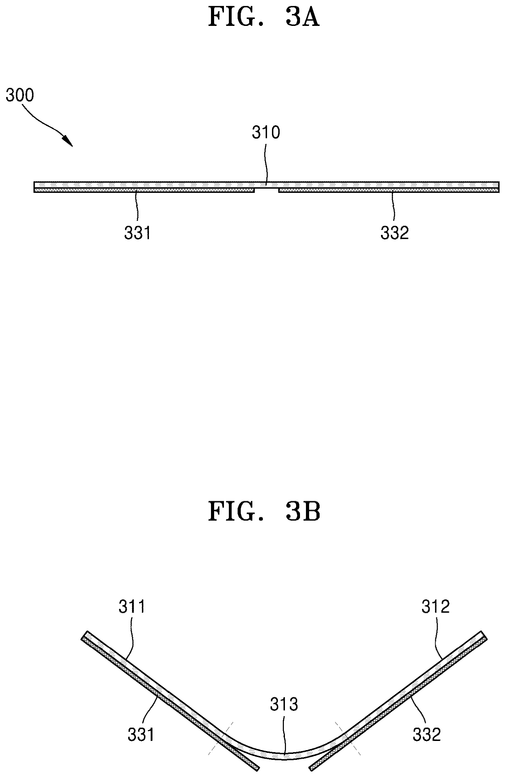

FIG. 3A is a side view showing an unfolded state of the flexible display module 300 including the support panel 330 according to an embodiment, and FIG. 3B is a side view showing a bent state of the flexible display module 300 including the support panel 330 according to an embodiment.

Referring to FIGS. 1 through 3B, the first support panel 331 may be disposed on the first housing 110, and the second support panel 332 may be disposed on the second housing 120. The first support panel 331 and the second support panel 332 may support the connection between the first housing 110 and the second housing 120.

The first support panel 331 and the second support panel 332 may have flat sheet shapes. The first support panel 331 and the second support panel 332 may have the same shapes and may be arranged symmetrically, but are not limited thereto, and may have different shapes and be arranged asymmetrically.

The flexible display panel 310 may be disposed across the first housing 110 and the second housing 120. The flexible display panel 310 may be supported by the first housing 110 and the second housing 120 by using the first support panel 331 and the second support panel 332. The first support panel 331 and the second support panel 332 may be disposed spaced apart from each other so as not to apply impact to the flexible display panel 310 when the first housing 110 and the second housing 120 are folded together.

The flexible display panel 310 may include a first zone 311 that is disposed in the first housing 110 and is maintained flat, a second zone 312 that is disposed in the second housing 120 and is maintained flat, and a bending zone 313 that is disposed at a location where the first housing 110 and the second housing 120 are connected to each other, has flexibility, and is capable of being bent. For example, the hinge part 200 may be disposed below the bending zone 313.

The first zone 311 may be disposed on and adhered to the first support panel 331, and the second zone 312 may be disposed on and adhered to the second support panel 332. A portion of the bending zone 313 may be supported by the first support panel 331 and another portion thereof may be supported by the second support panel 332. The bending zone 313 may be supported by but not bonded to the first support panel 331 and the second support panel 332 in an unfolded state so that the first housing 110 and the second housing 120 may freely bend when folded or unfolded relative to each other.

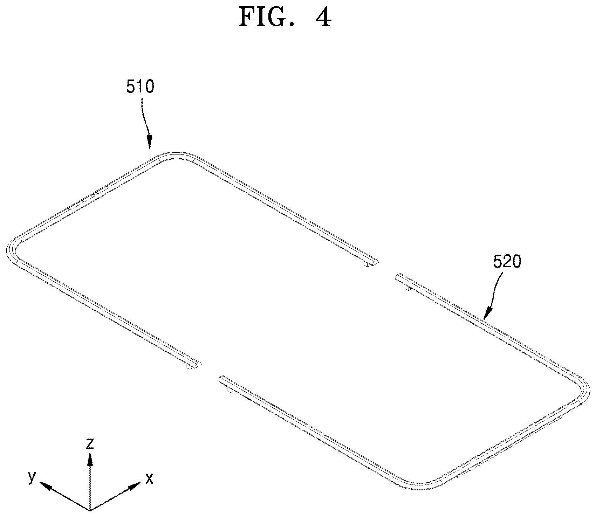

FIG. 4 is a perspective view of the decorative member 500 according to an embodiment.

Referring to FIGS. 1, 2, and 4, the decorative member 500 of the electronic device 10 according to an example may be disposed on a periphery of the flexible display panel 310 so that the periphery of the flexible display panel 310 is not exposed to the outside. The decorative member 500 may include a first decorative member 510 and a second decorative member 520.

The first decorative member 510 may be disposed along a periphery of the flexible display panel 310 disposed on the first housing 110, and the second decorative member 520 may be arranged along a periphery of the flexible display panel 310 disposed on the second housing 120. For example, the first decorative member 510 may be disposed on a periphery of the first zone 311 of the flexible display panel 310, and the second decorative member 520 may be disposed on a periphery of the second zone 312 of the flexible display panel 310. For example, the periphery of the first zone 311 of the flexible display panel 310 may be arranged so as not to be exposed to the outside between the first decorative member 510 and the first housing 110, and the periphery of the second zone 312 may be arranged so as not to be exposed to the outside between the second decorative member 520 and the second housing 120.

The first decorative member 510 and the second decorative member 520 may have the same shape and may be arranged symmetrically to each other. However, embodiments are not limited thereto, and the first decorative member 510 and the second decorative member 520 may have different shapes according to locations of a microphone, a speaker, and various sensors disposed on the first housing 110 and the second housing 120.

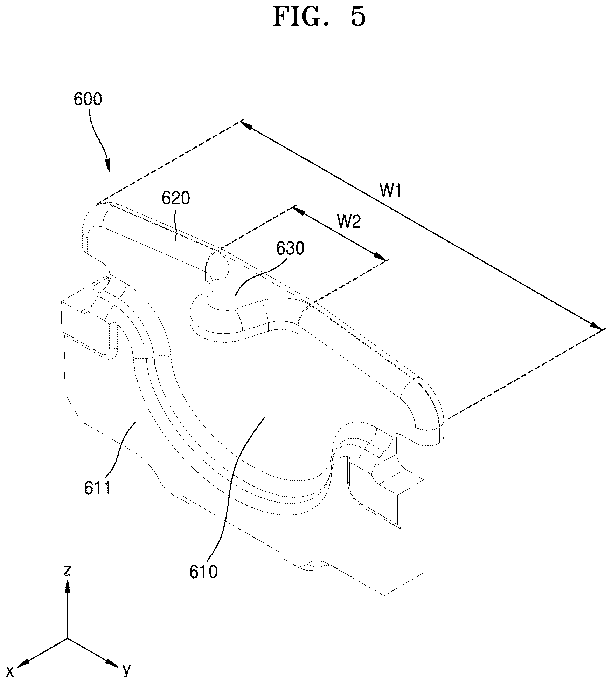

FIG. 5 is a perspective view of the protective cap 600 according to an embodiment.

Referring to FIGS. 2 and 5, the protective cap 600 of the electronic device 10 according to an example may protect at least a portion of a periphery of the flexible display panel 310 that is exposed to the outside on the bending zone 313. A pair of protective caps 600 may be disposed on both ends of the hinge part 200.

The protective cap 600 may include a base portion 610, a support portion 620, and a cap portion 630.

The base portion 610 may fix the protective cap 600 to an end of the hinge part 200. The base portion 610 may be supported by a cover (not shown) of the hinge part 200.

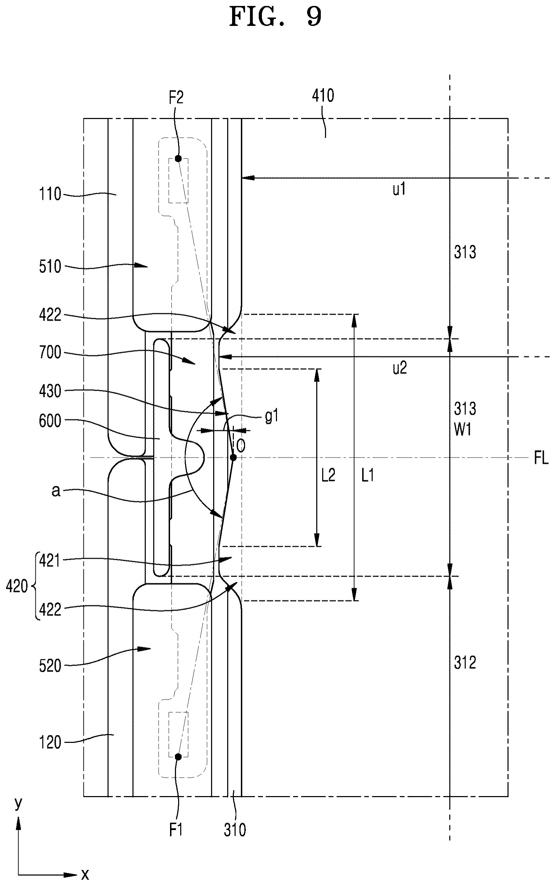

The support member 620 may extend in an upward direction (Z direction) from the base member 610, and may have a first width W1 in a second direction (Y direction) perpendicular to the upward direction (Z direction). The first width W1 may be determined according to a separation interval between the first decorative member 510 and the second decorative member 520. The protective cap 600 including the support portion 620 having the first width W1 may protect the periphery of the flexible display panel 310 not covered by the first decorative member 510 and the second decorative member 520. For example, the first width W1 may correspond to a width of the bending zone 313 of the flexible display panel 310 (see FIG. 9).

The cap portion 630 may be arranged to extend from the support portion 620 toward the flexible display panel 310. The cap portion 630 may support at least a portion of the dust cover member 700, which will be described later. The cap portion 630 may have a second width W2 less than the first width W1. The cap portion 630 may be formed with a width that gradually decreases in a direction from the support portion 620 to the flexible display panel 310. The second width W2 of the cap portion 630 may be determined according to a diameter of a folding curvature formed when the flexible display panel 310 is folded. For example, the second width W2 may be formed to be less than or equal to the diameter of the folding curvature.

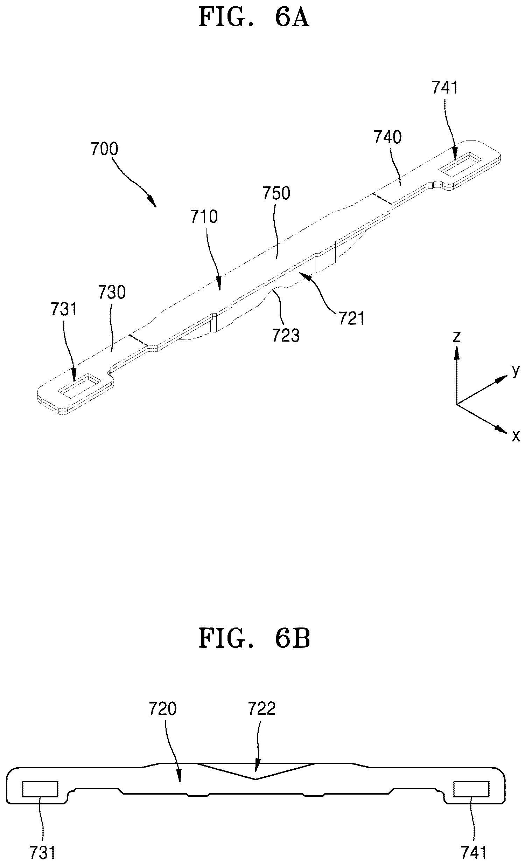

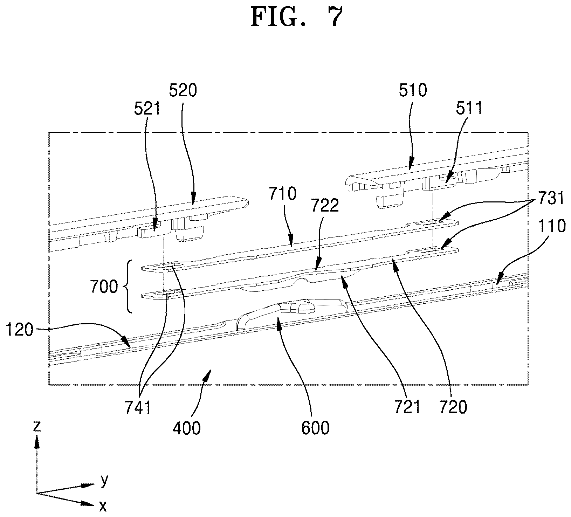

FIG. 6A is a perspective view of the dust cover member 700 according to an embodiment, and FIG. 6B is a bottom plan view of the dust cover member 700 according to an embodiment. FIG. 7 is a partial exploded perspective view of the electronic device 10 according to an embodiment.

The dust cover member 700 of the electronic device 10 according to an example may be disposed to cover at least a portion of the periphery of the flexible display panel 310. For example, a pair of dust cover members 700 may be disposed on a periphery of the bending zone 313 of the flexible display panel 310. The dust cover member 700 may connect the first decorative member 510 to the second decorative member 520.

Referring to FIGS. 2, 6A, 6B, and 7, the dust cover member 700 may include a first member 710 and a second member 720. The first member 710 and the second member 720 may have shapes corresponding to each other, and an upper surface of the second member 720 may be coupled to a lower surface of the first member 710. For example, the first member 710 may be disposed substantially facing the protective cap 600, and the second member 720 may be positioned facing the periphery of the flexible display panel 310. The first member 710 and the second member 720 of the dust cover member 700 may be coupled to each other and may be integrally bent.

In one example, the first member 710 and the second member 720 may be formed of materials having different rigidities. For example, the first member 710 may include a material having a relatively high rigidity, thereby preventing damage to the flexible display panel 310. For example, the second member 720 may include a material having a relatively low rigidity.

The second member 720 may include a side rib 721 extending downward from the second member 720 to face the periphery of the flexible display panel 310. The side rib 721 may protect the periphery of the flexible display panel 310 from external impact. A bend receiving groove 723 may be located in a center bottom of the side rib 721. The bend receiving groove 723 may provide flexibility so that the side rib 721 may also be bent when the dust cover member 700 is bent.

The dust cover member 700 may include a first fixing portion 730, a second fixing portion 740, and a bending portion 750.

The bending portion 750 may be disposed to extend along in a lengthwise direction of the dust cover member 700 to cover the periphery of the flexible display panel 310 in the bending zone 313. The bending portion 750 may also be bent when the flexible display panel 310 is bent. The dust cover member 700 may be disposed such that the cap portion 630 of the protective cap 600 is located on the bending portion 750.

The first fixing portion 730 and the second fixing portion 740 may be arranged on both ends of the bending portion 750, respectively. The first fixing portion 730 may be disposed to extend from the bending portion 750 to between the first decorative member 510 and the first housing 110. The second fixing portion 740 may be disposed to extend from the bending portion 750 to between the second decorative member 520 and the second housing 120.

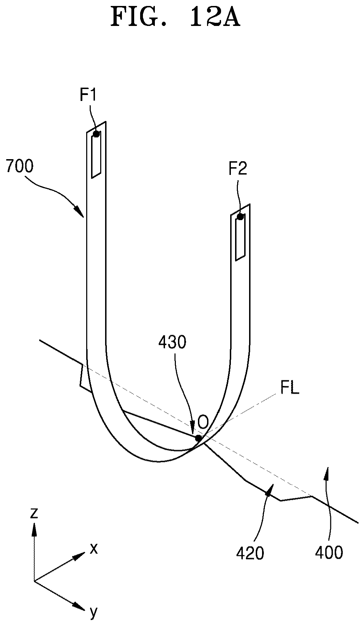

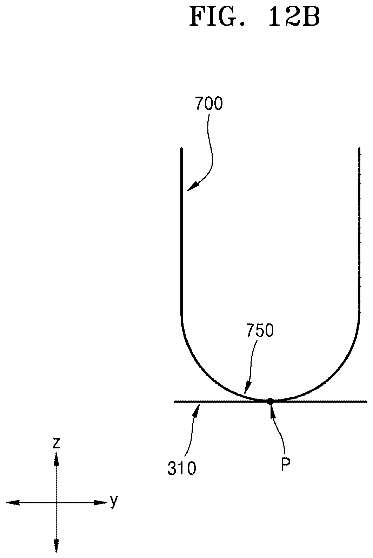

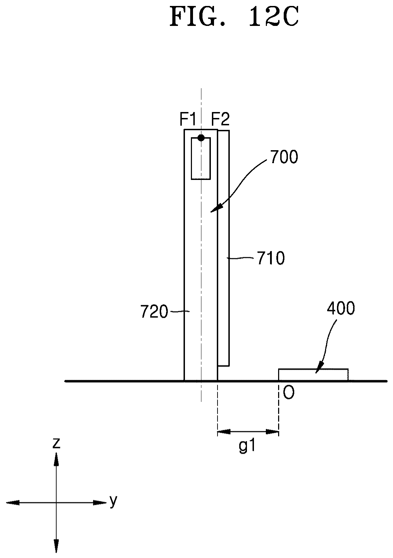

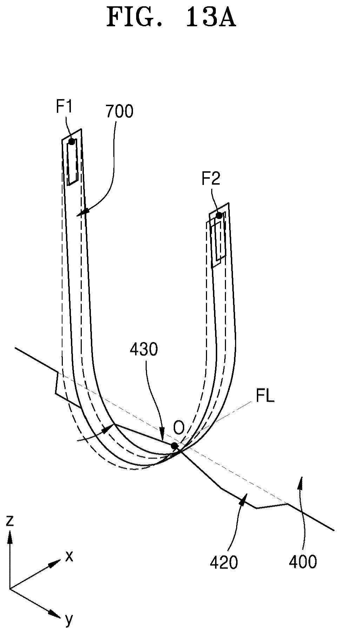

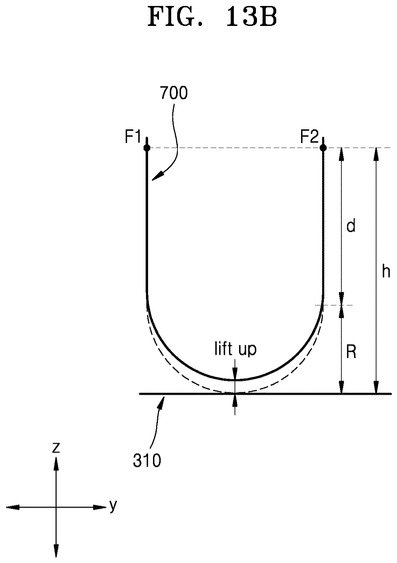

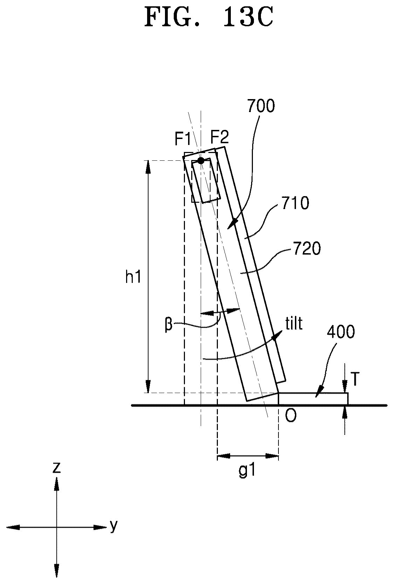

A first guide hole 731 and a second guide hole 741 may be arranged in the first fixing portion 730 and the second fixing portion 740, respectively. First guide protrusion 511 disposed on the first decorative member 510 may be inserted into the first guide hole 731. Second guide protrusion 521 disposed on the second decorative member 520 may be inserted into the second guide hole 741. When the first housing 110 and the second housing 120 are folded, the first fixing portion 730 may move along the first guide protrusion 511 passing through the first guide hole 731, and the second fixing portion 740 may move along the second guide protrusion 521 passing through the second guide hole 741. The dust cover member 700 may be bent and tilted toward the display protective film 400 during folding of the electronic device 10. An operation of a dust cover member in a folding operation will be described later with reference to FIGS. 12 and 13.

The dust cover member 700 may further include a concave portion 722. The concave portion 722 may prevent damages to the display protective film 400 and the flexible display panel 310 by preventing the dust cover member 700 from coming into contact with the display protective film 400 during folding of the electronic device 10.

The concave portion 722, which is a groove having a predetermined open angle a (see FIG. 9) toward the flexible display panel 310, may be formed in the dust cover member 700. For example, the concave portion 722 may be formed only in the second member 720, or may be formed simultaneously in the first member 710 and the second member 720. The arrangement and function of the concave portion 722 will be described in detail later.

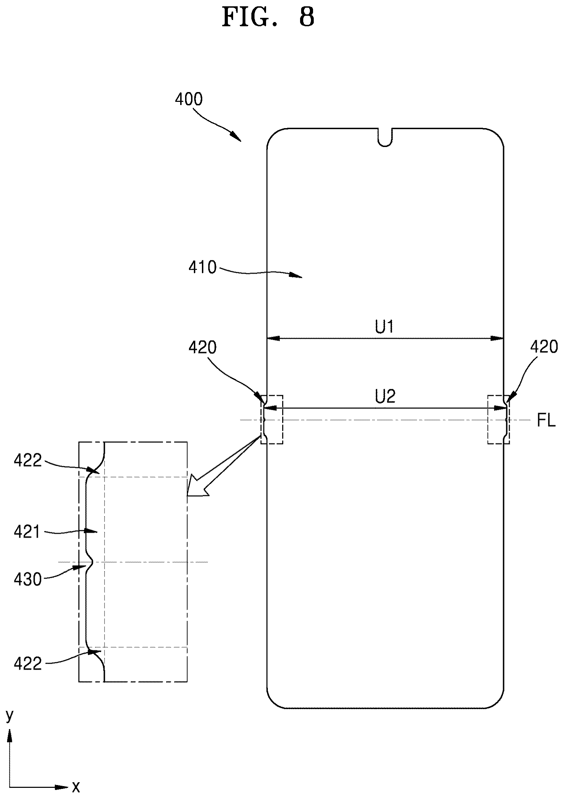

FIG. 8 is a plan view of the display protective film 400 according to an embodiment, and FIG. 9 is a partial magnified view of the electronic device 10 according to one embodiment in an unfolded state.

Referring to FIGS. 2, 8, and 9, the display protective film 400 according to an example may be disposed on a front surface of the flexible display panel 310 to reduce impact caused by an external force or prevent occurrence of cracks, thereby preventing damage to the flexible display panel 310. For example, the display protective film 400 may include a main portion 410) and a protrusion 420.

The main portion 410 may extend along a flat surface of the flexible display panel 310. For example, the main portion 410 may cover a touch flat surface of the flexible display panel 310. The main portion 410 may have a first width U1 in a first direction (X direction) parallel to a hinge axis. A peripheral edge of the main portion 410 may be disposed apart from the first decorative member 510 and the second decorative member 520 by a predetermined gap.

The protrusion 420 may be arranged to protrude outwardly in the first direction (X direction) from both sides of the main portion 410. A pair of protrusions 420 may be arranged to extend toward a pair of protective caps 600, respectively, from the periphery of the main portion 410 disposed on the bending zone 313 of the flexible display panel 310. The display protective film 400 may have a second width U2 greater than the first width U1 in the first direction (X direction) between the two protrusions 420. The protrusion 420 may be disposed a predetermined gap g1 apart from the dust cover member 700.

The protrusion 420 may include a first region 421 extending along the periphery of the main portion 410 in the second direction (Y direction), and a second region 422 connected to the main portion 410 at an end of the first region 421. The pair of protrusions 420 may have the second width U2 in the first direction (X direction) between the two protrusions 421. The second region 422 may be arranged in a shape in which a width gradually decreases on an end of each of the first regions 421 of the pair of protrusions 420. For example, the second region 422 may be arranged in a shape in which the width gradually decreases so that the second width U2 of the first region 421 is connected to the first width U1 of the main portion 410. An edge shape of the second region 422 may have a curve. The second region 422 may prevent peeling of the protrusion 420 provided on the display protective film 400, when the electronic device 10 is folded or unfolded.

Referring to FIG. 9, the protrusion 420 may cover the bending zone 313 of the flexible display panel 310. The protrusion 420 may cover respective portions of the first zone 311 and the second zone 312 around the bending zone 313 of the flexible display panel 310. For example, the protrusion 420 may have a width L1 greater than the width W1 of the bending zone 313 in the second direction (Y direction). For example, the first region 421 of the protrusion 420 may be disposed within the bending zone 313, and the second region 422 may be disposed outside the bending zone 313.

The protrusion 420 covering the bending zone 313 may reduce edge stress of the display protective film 400 in the bending zone 313. For example, when the protrusion 420 is not arranged on the display protective film 400, peeling of the display protective film 400 may occur due to stress caused by a thickness of a display. The display protective film 400 according to an embodiment may reduce the risk of deformation of the display protective film 400 by reducing stress in the bending zone 313 by including the protrusion 420.

Referring again to FIGS. 8 and 9, a dent region 430 recessed toward the main portion 410 along the first direction (X direction) may be further disposed in the ®protrusion 420. The dent region 430 may be disposed within the protrusion 420. For example, a lowest portion O, which is a most indented location in the dent region 430, may be disposed on the outside of the main portion 410. When the dent region 430 deviates from the main portion 410 and is completely disposed within the protrusion 420, the main region of the flexible display panel 310 may be covered by the main portion 410.

The dent region 430 may be formed around a folding line FL, which is a reference line along which the display protective film 400 is folded during folding of the electronic device 10. For example, the dent region 430 may be formed symmetrically about the folding line FL. For example, the lowest portion O, which is a most indented location in the dent region 430, may be disposed on the folding line FL. The dent region 430 may guide folding of the display protective film 400 along the folding line FL, during folding of the electronic device 10. By the dent region 430 guiding the folding of the display protective film 400, the display protective film 400 may be bent at several locations within the bending zone 313, thereby preventing occurrence of buckling defects. The dent region 430 may prevent the display protective film 400 from being peeled off from the flexible display panel 310.

The dent region 430 may prevent damage to the display protective film 400 by preventing the dust cover member 700 from coming into contact with the display protective film 400 during folding of the electronic device 10. In this case, the dent region 430 may have a predetermined open angle a toward the dust cover member 700, and the lowermost portion O and the dust cover member 700 may be the predetermined interval g1 or more apart from each other.

FIG. 10 is a cross-sectional view of the electronic device 10 according to an embodiment.

Referring to FIG. 10, the display protective film 400 may be disposed on the flexible display panel 310 including a plurality of layers. The dust cover member 700 may be disposed between the protective cap 600 and the flexible display panel 310. The dust cover member 700 may protect an edge of the flexible display panel 310. The second member of the dust cover member 700 may be disposed such that the side rib 721 is located on a lateral surface of the flexible display panel 310.

When the concave portion 722 is formed only in the second member 720 of the dust cover member 700, the display protective film 400 may be spaced apart from the concave portion 722 by the predetermined gap g1. For example, the lowest portion O of the dent region 430 and a lowest portion Oi of the concave portion 722 may be spaced apart from each other by the predetermined gap g1. In addition, a thickness t2 of the second member 720 of the dust cover member 700 may be formed to be greater than a thickness t1 of the display protective film 400. In this case, even when the concave portion 722 is formed only in the second member 720 of the dust cover member 700, the first member 710 may be prevented from touching the display protective film 400 regardless of a gap between the first member 710 and the display protective film 400. Accordingly, the strength of the dust cover member 700 may be maintained by only adjusting an X-direction width of the second member 720 and a shape of the concave portion 722 and maintaining an X-direction width of the first member 710.

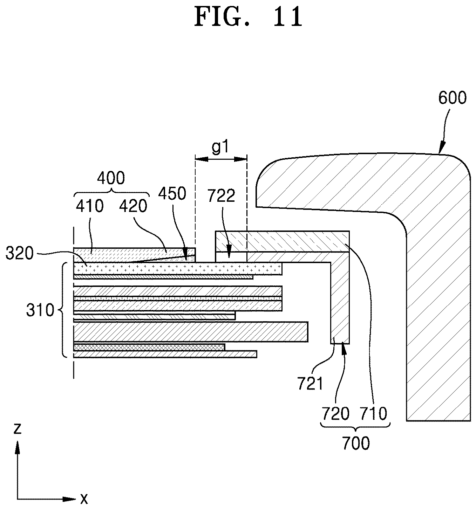

FIG. 11 is a cross-sectional view of the electronic device 10 including a reinforcing layer 450 according to an embodiment.

Referring to FIG. 11, the reinforcing layer 450 may be further disposed between the flexible display panel 310 and the display protective film 400. The reinforcing layer 450 according to an example may include a thick adhesive layer (OCA). The reinforcing layer 450 may be disposed between the protrusion 420 and the flexible display panel 310 to strengthen adhesion. When the reinforcing layer 450 is disposed, the display protective film 400 may be formed such that the main portion 410 and the protrusion 420 have different thicknesses. For example, the thickness of the protrusion 420 is formed to be smaller than that of the main portion 410, so that, even when the reinforcing layer 450 is added, the display protective film 400 may remain flat.

When the reinforcing layer 450 is further arranged between the protrusion 420 and the flexible display panel 310, a portion of the upper panel 320 included in the flexible display panel 310 may also be formed with a different thickness. For example, a thickness of the upper panel 320 at a location where the reinforcing layer 450 is disposed may be less than that of the remaining portion. The upper panel 320 may be one of ultra-thin glass, a hard coating of ultra-thin glass, a plastic film permanently attached to the ultra-thin glass to protect the ultra-thin glass, and a hard coating layer of a plastic film permanently attached to the ultra-thin glass.

Referring back to FIG. 6 and FIG. 9, the display protective film 400 is disposed apart from the dust cover member 700 by the predetermined gap g1 at the lowest portion O of the dent region 430. When the electronic device 10 is bent, the bending portion 750 of the dust cover member 700 may also be bent and tilted toward the display protective film 400. At this time, the predetermined gap g1 may be determined to prevent damage to the display protective film 400 due to interference between the dust cover member 700 and the display protective film 400. The predetermined gap g1 may be determined by the tilting degree of the dust cover member and a thickness T of the display protective film 400. The predetermined gap g1 is explained through FIGS. 12A through 12C, which are drawings showing a case where the dust cover member 700 is not tilted, and FIGS. 13A through 13C, which are drawings showing a case where the dust cover member 700 is tilted.

FIG. 12A is a perspective view showing a shape in which the dust cover member 700 is not tilted in a bent state of the electronic device 10 according to an embodiment, FIG. 12B is a side view, and FIG. 12C is a front view.

Referring to FIGS. 12A through 12C, when the dust cover member 700 is bent but not tilted, the bending portion 750 of the dust cover member 700 may contact the flexible display panel 310 at one point P. When the second member 720 of the dust cover member 700 may contact the flexible display panel 310, the second member 720 of the dust cover member 700 may be spaced the predetermined gap g1 apart from the lowest portion O of the dent region 430 formed in the display protective film 400.

FIG. 13A is a perspective view showing a shape in which a dust cover member is not tilted in a bent state of an electronic device according to an embodiment, FIG. 13B is a side view, and FIG. 13C is a front view.

Referring to FIG. 6 and FIGS. 13A through 13C, the dust cover member 700 may be tilted toward the display protective film 400 about an axis passing through a first anchor point F1 on the first guide hole 731 and a second anchor point F2 on the second guide hole 741, in a bent state. Herein, the first anchor point F1 may be a point on the first guide hole 731 that the first guide protrusion 511 of the first decorative member 510 comes into contact with, and the second anchor point F2 may be a point on the second guide hole 741 that the second guide protrusion 521 of the second decorative member 520 comes into contact with. For example, the first anchor point F1 may be disposed on an outer central portion of the first guide hole 731, and the second anchor point F2 may be disposed on an outer central portion of the second guide hole 741.

Referring to FIG. 13B, when the dust cover member 700 is not tilted, a length of the dust cover member 700 in a third direction (Z direction) is defined as h. For example, h may be a length of the dust cover member 700 projected on a Z-axis when the dust cover member 700 is bent and not tilted. R is a bending radius of the flexible display panel 310 in the bending zone 313, and d is a length of the dust cover member from the bending portion 750 to the first or second anchor point F1 or F2. Therefore, h = R + d may be established.

Referring to FIG. 13C, the dust cover member 700 may be tilted by a predetermined inclination angle β toward the display protective film 400 from the axis passing through the first anchor point F1 and the second anchor point F2. When the dust cover member 700 is tilted, a length of the dust cover member 700 in the third direction (Z direction) is defined as h1. For example, h1 may be a length of the dust cover member 700 projected on the Z-axis when the dust cover member 700 is bent and tilted toward the display protective film 400. A thickness of the display protective film 400 is T, and the predetermined inclination angle β may be determined using Equation 1 below.

[Equation 1]

$$\cos(\beta) = \frac{h1}{h} = \frac{(h-T)}{h}$$

Equation 1 above may be modified as follows.

$$\cos(\beta) = \frac{(R+d-R)}{R+d}$$

In FIG. 13C, the predetermined gap g1 from an edge of the display protective film 400 to an edge of the dust cover member 700 may be determined using Equation 2 below.

[Equation 2]

$$g1 = h\sin(\beta)$$

According to Equations 1 and 2 above, the predetermined gap g1 may be defined based on the thickness T of the display protective film 400, the bending radius R of the flexible display panel 310, and a length d of the dust cover member from the bending portion 750 of the dust cover member 700 to the first or second anchor point F1 or F2.

As described above, when the electronic device 10 is bent, the dust cover member 700 and the display protective film 400 may be disposed to be spaced apart from each other by the predetermined gap g1 so that the dust cover member 700 does not overlap the display protective film 400 as being bent and tilted.

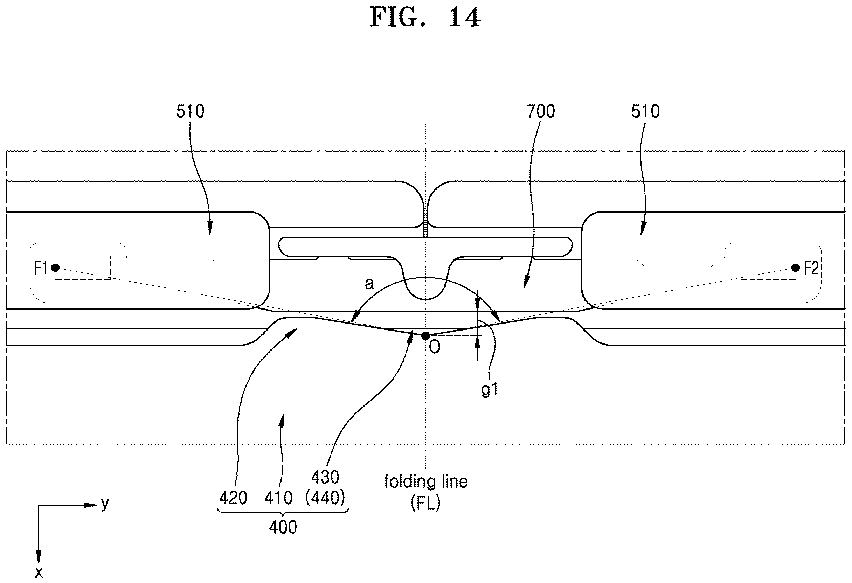

FIG. 14 is a partial magnified view of the electronic device 10 when the dent region 430 has the predetermined open angle a, according to an embodiment.

Referring to FIG. 14, the dent region 430 may have the predetermined open angle a from the protrusion 420 of the display protective film 400 toward the dust cover member 700. The dent region 430 may be disposed the predetermined gap g1 apart from the dust cover member 700. For example, when the lowest portion O of the dent region 430 is on the folding line FL, the predetermined open angle a may be determined to be greater than or equal to an angle formed by the first anchor point F1 and the second anchor point F2 with the lowest portion O of the dent region 430 as a center. For example, the predetermined minimum open angle a may be an angle formed by F1-O-F2. The lowest portion O of the dent region 430 of the display protective film 400 may be spaced apart from the dust cover member 700 by the predetermined gap g1.

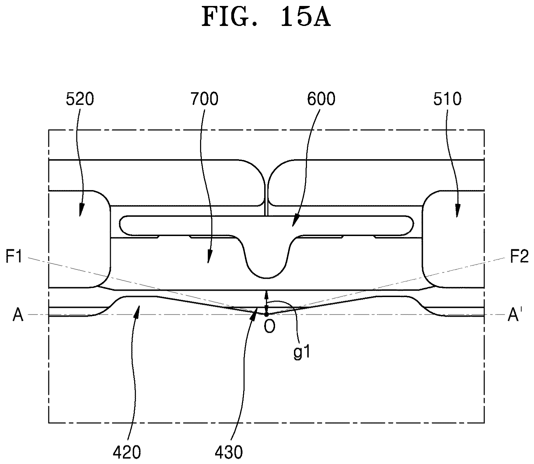

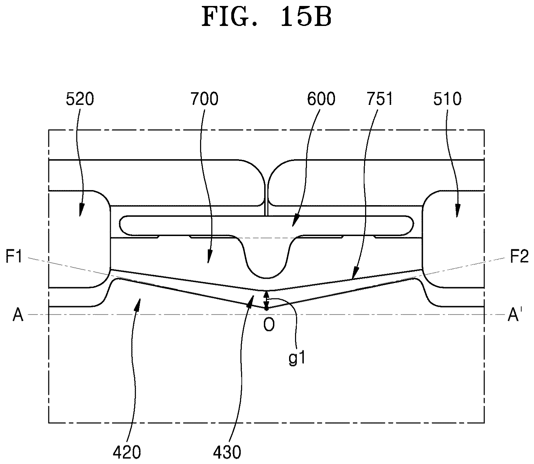

FIGS. 15A and 15B illustrate shapes of protrusions according to the shape of the dust cover member 700 when the dent region 430 has the predetermined open angle a, according to an embodiment.

FIG. 15A shows a case where the dust cover member 700 facing the protrusion 420 has a constant width. Referring to FIG. 15A, the dent region 430 may be formed in the protrusion 420 such that the lowest portion O of the dent region 430 may be spaced apart from the dust cover member 700 by the predetermined gap g1. The predetermined open angle a of the dent region 430 may be formed to be greater than the angle formed by F1-O-F2.

FIG. 15B shows a case where a first edge 751 of the dust cover member 700 facing the protrusion 420 has a shape corresponding to formation of the dent region 430. Referring to FIG. 15B, the dent region 430 may be formed in the protrusion 420 such that the lowest portion O of the dent region 430 may be spaced apart from the dust cover member 700 by the predetermined gap g1. As the shape of the first edge 751 of the dust cover member 700 facing the protrusion 420 has a shape corresponding to the dent region 430, the predetermined open angle a of the dent region 430 may be formed to be the angle formed by F1-O-F2. Compared to FIG. 15A, in FIG. 15B, an area covered by the protrusion 420 may increase. A boundary of the main portion 410 may be arranged to move beyond a line AA' toward the first decorative member 510 and the second decorative member 520. Accordingly, an area that the display protective film 400 is able to cover increases according to the shape of the first edge 751 of the dust cover member 700, thereby efficiently protecting the flexible display panel 310.

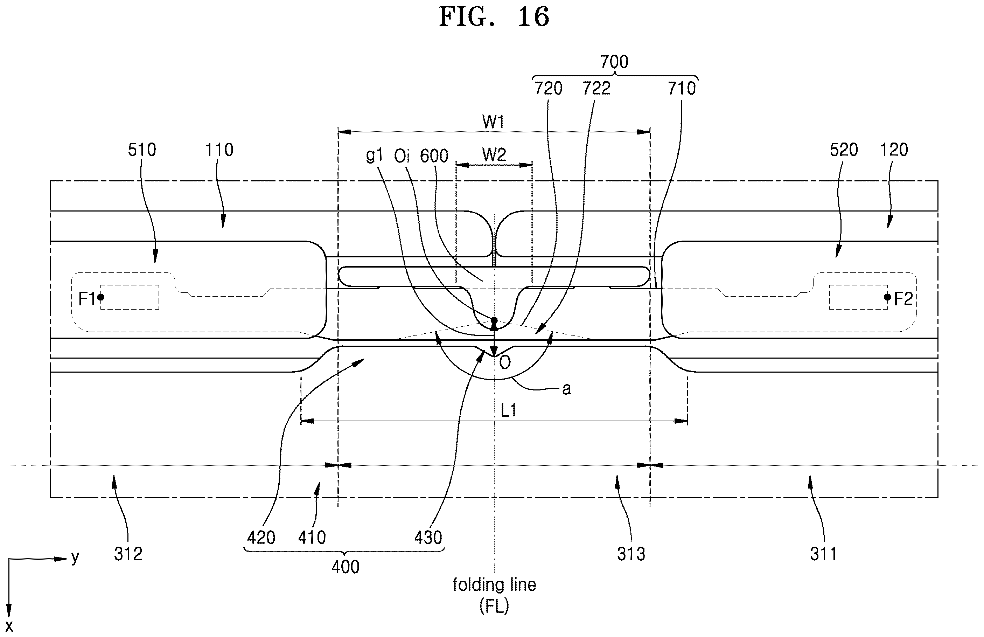

FIG. 16 is a partial magnified view of the electronic device 10 in which the concave portion 722 is disposed on the second member 720 of the dust cover member 700, according to an embodiment.

Referring to FIG. 16, the concave portion 722 may be disposed on the second member 720 and may have the predetermined open angle atoward the protrusion 420. The lowermost portion Oi of the concave portion 722 may be disposed on the folding line FL. The lowest portion O of the dent region 430 and the lowest portion Oi of the concave portion 722 may be spaced apart from each other by the predetermined gap g1. For example, the predetermined open angle a of the concave portion 722 may be formed to be the same as the predetermined open angle a of the dent region 430 of FIG. 14.

In FIGS. 14 through 16, only one of the dent region 430 or the concave portion 722 arranged in the dust cover member 700 is illustrated as having the predetermined open angle a. However, embodiments are not limited thereto, and both the dent region 430 and the concave portion 722 may be arranged to have the predetermined open angles a toward each other, or may also be arranged to have different open angles a.

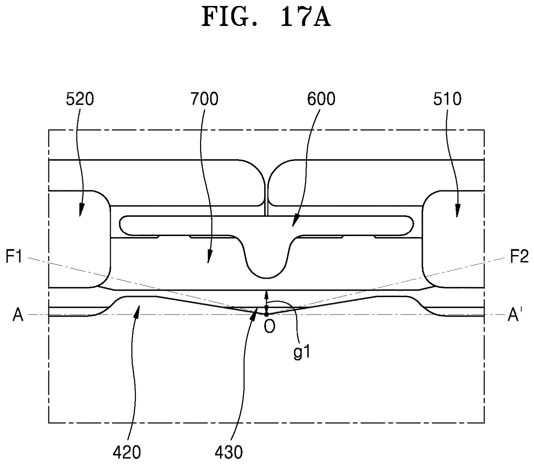

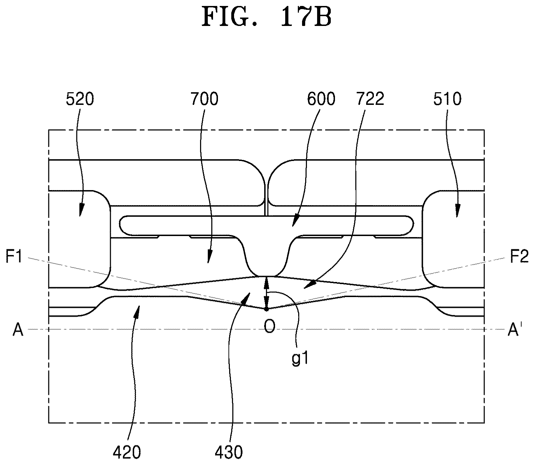

FIGS. 17A and 17B illustrate shapes of protrusions 420 according to the shape of the dust cover member 700 when the concave portion 722 is disposed on the dust cover member 700, according to an embodiment.

Similar to FIG. 15A, FIG. 17A shows a case where the dust cover member 700 facing the protrusion 420 has a constant width. Referring to FIG. 17A, the dent region 430 may be formed in the protrusion 420 such that the lowest portion O of the dent region 430 may be spaced apart from the dust cover member 700 by the predetermined gap g1. The predetermined open angle a of the dent region 430 may be formed to be greater than the angle formed by F1-O-F2.

FIG. 17B shows a case where the concave portions 722 are disposed in both the first member 710 and the second member 720 of the dust cover member 700, respectively. For example, concave portions 722 of the same shapes may be formed in the first member 710 and the second member 720, respectively. Compared to FIG. 17A, in FIG. 17B, the lowest portion O of the dent region 430 may move toward the protective cap 600 and be positioned such that the lowest portion O of the dent region 430 and the lowest portion Oi of the concave portion 722 are spaced apart from each other by the predetermined gap g1. At this time, for example, the open angle of the dent region 430 may be formed to be the angle formed by F1-O-F2. A boundary of the main portion 410 may be arranged to move beyond a line AA' toward the first decorative member 510 and the second decorative member 520. Accordingly, the area covered by the protrusion 420 increases, so that the flexible display panel 310 may be efficiently protected.

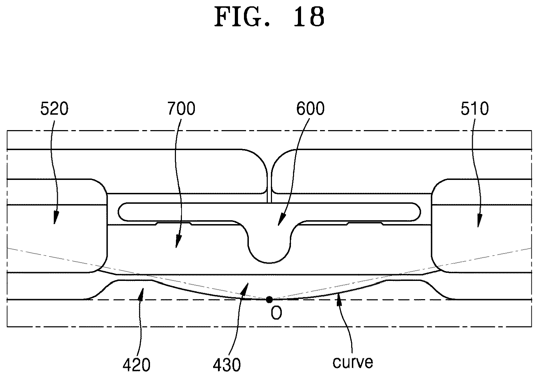

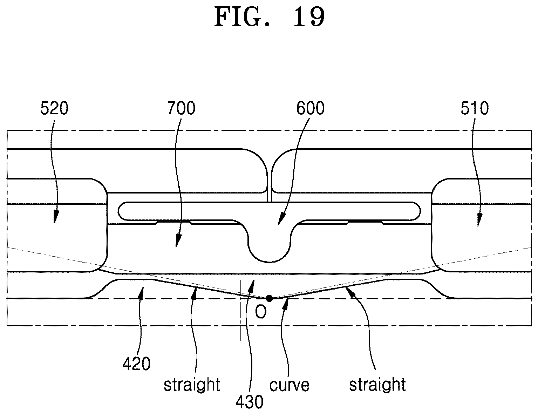

FIGS. 18 and 19 are partial magnified views of electronic devices 10 including dent regions 430 of various shapes according to an embodiment.

Referring to FIG. 18, a boundary of the dent region 430 may be formed as a curve. The dent region 430 may be disposed to have a predetermined open angle a greater than the above-described angle formed by F1-O-F2.

Referring to FIG. 19, the boundary of the dent region 430 may be partially formed as a curve. A boundary of the dent region 430 near the lowest portion O may be formed as a curve to have a predetermined open angle a greater than the above-described angle formed by F1-O-F2, and a remaining boundary thereof may be formed as a straight line.

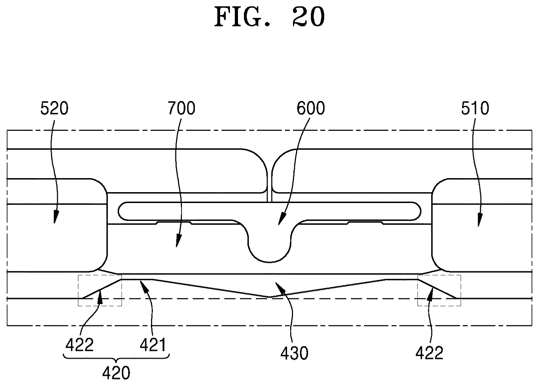

FIGS. 20 through 22 are partial magnified views of electronic devices 10 including second regions 422 of various shapes disposed in the protrusion 420 according to an embodiment.

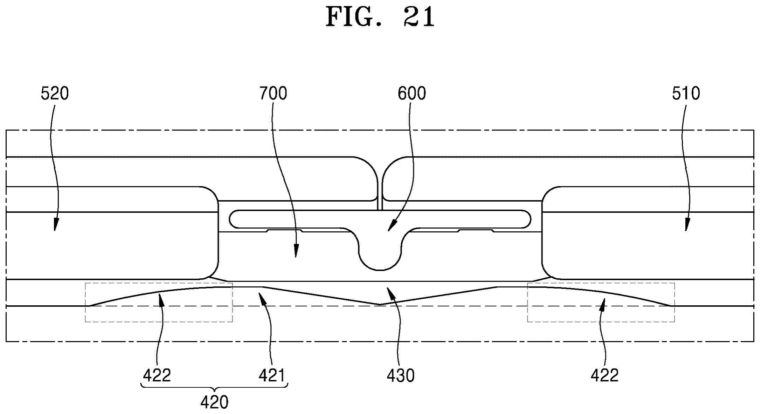

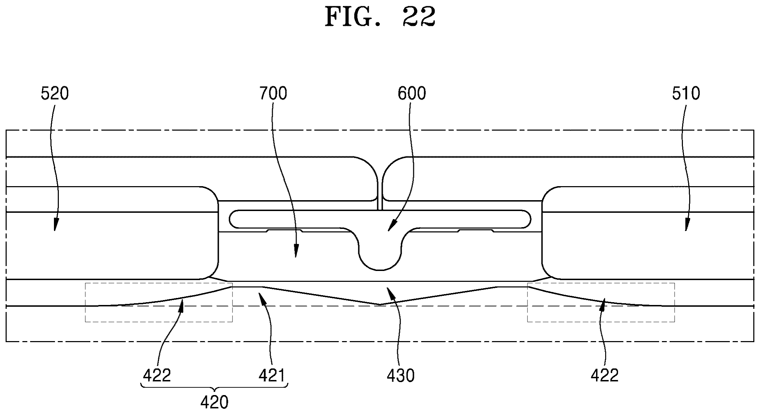

The second region 422 of the protrusion 420 may be formed as a straight line at an end of the first region 421 (see FIG. 20), may be formed as a convex curve toward the dust cover member 700 (see FIG. 21), or may be formed as a concave curve toward the dust cover member 700 (see FIG. 22).

As shown in FIGS. 18 through 22, the protrusion 420 and the dent region 430 may maintain the predetermined gap g1 between the lowest portion O of the dent region 430 and the dust cover member 700, and may be implemented in various shapes within a range having a predetermined open angle a.

For understanding of the disclosure, reference numerals have been written in embodiments shown in the drawings and specific terms have been used to describe the embodiments, but the disclosure is not limited by the specific terms and the disclosure may include all components commonly conceivable by one of ordinary skill in the art.

Specific executions described in the disclosure are embodiments, and do not limit the scope of the disclosure in any way. For the sake of brevity, conventional electronics, control systems, software development and other functional aspects of the systems may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential for application of the disclosure unless the item or component is specifically described as "essential" or "critical". Expressions such as "comprising" and "including" used herein are used to be understood as terms of an open end of technology.

The use of the term "the" and similar referents in the context of describing the present invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. The operations that constitute a method described herein can be performed in any suitable order unless otherwise indicated herein or otherwise clearly contradicted by context. The disclosure is not limited to the described order of the operations. The use of any and all examples, or exemplary language (e.g., "such as") provided herein, is intended merely to better illuminate the disclosure and does not pose a limitation on the scope of the disclosure unless otherwise claimed. Numerous modifications and adaptations will be readily apparent to one of ordinary skill in the art without departing from the spirit and scope of the disclosure.

An electronic device according to an embodiment includes a display protective film capable of preventing scratches from occurring during use of the electronic device by exposing a surface of a flexible display to the outside. An electronic device may be provided in which a display protective film prevents deformation, buckling, and peeling due to repeated folding and unfolding, thereby preventing a malfunction of the electronic device. A display protective film having an improved structure according to an embodiment may have an improved fixing strength with respect to a flexible display panel, and may enhance the protective performance of the flexible display panel.

An electronic device according to an embodiment may include a first housing; a second housing that is coupled to the first housing to be pivotable about an axis; a hinge portion configured to connect the first housing to the second housing; a flexible display panel mounted across the first housing and the second housing, the flexible display panel including a bending zone disposed with a predetermined width from a folding line FL disposed in a first direction parallel to a hinge axis of the hinge portion; a pair of protective caps arranged on both ends of the hinge portion, respectively; and a display protective film disposed on a front surface of the flexible display panel, the display protective film including a main portion extending along a plane of the flexible display panel and a pair of protrusions respectively extending from both lateral surfaces of the main portion toward the pair of protective caps.

The protrusion has a width L1 exceeding a width W1 of the bending zone in a second direction perpendicular to the first direction.

A dent region that is recessed toward the main portion in the first direction may be further disposed in the protrusion.

The protrusion may include a first region extending in a second direction perpendicular to the first direction and a pair of second regions arranged on both ends of the first region to connect the ends of the first region to the main portion, and the second region may be disposed outside the bending zone in the second direction.

The electronic device may further include a first decorative member arranged along a periphery of the flexible display panel arranged on the first housing; a second decorative member arranged along the periphery of the flexible display panel arranged on the second housing; and a pair of dust cover members arranged on an edge of the flexible display panel and configured to connect the first decorative member to the second decorative member.

The protrusion may be spaced apart from the dust cover member at a lowest portion O of the dent region by at least a predetermined gap g1.

The dent region may have a predetermined open angle a toward the dust cover member, and a first edge adjacent to the protrusion of the dust cover member may have a shape corresponding to a shape of the dent region.

The electronic device may further include a concave portion disposed on the dust cover member, the concave portion including a lowermost portion Oi disposed on the folding line FL and having a predetermined open angle a.

The dust cover member may include a first member disposed facing the protective cap and a second member disposed below the first member and positioned facing the periphery of the flexible display panel.

The concave portion may be disposed in the second member, and the second member may have a thickness t2 greater than a thickness t1 of the display protective film.

A distance between the lowest portion O of the dent region and the lowest portion Oi of the concave portion may have a predetermined interval g1.

The dust cover member may include a bending portion extending in one direction; a first fixing portion and a second fixing portion arranged on both ends of the bending portion, respectively; a first guide hole disposed in the first fixing portion and into which a first guide protrusion disposed on the first decorative member is inserted; and a second guide hole disposed in the second fixing portion and into which a second guide protrusion disposed on the second decorative member is inserted.

When the first housing pivots about an axis to be adjacent to the second housing, the dust cover member may be tilted at a predetermined inclination angle β toward the display protective film such that the dust cover member does not come into contact with the display protective film, based on an axis passing through the first guide hole and the second guide hole.

The predetermined inclination angle β may be determined according to Equation 1 below:

[Equation 1]

$$\cos(\beta) = \frac{h1}{h} = \frac{(h-T)}{h}$$

The predetermined interval g1 may be determined according to Equation 2 below.

[Equation 2]

$$g1 = h\sin(\beta)$$

(h is a length of the dust cover member in a third direction perpendicular to the first direction, when the first housing pivots about the one axis to be adjacent to the second housing and the dust cover member is not tilted, and h1 is a length of the dust cover member in the third direction, when the first housing pivots about the one axis to be adjacent to the second housing and the dust cover member is tilted).

**Claims**

1. An electronic device comprising:

   a first housing (110);
   a second housing (120) that is coupled to the first housing to be pivotable about an axis;
   a hinge portion (200) connecting the first housing to the second housing;
   a flexible display panel (310) mounted across the first housing and the second housing, the flexible display panel (310) comprising a bending zone (313) disposed with a predetermined width from a folding line (FL) disposed in a first direction parallel to a hinge axis of the hinge portion;
   a pair of protective caps (600) respectively arranged on both ends of the hinge portion; and
   a display protective film (400) disposed on a front surface of the flexible display panel, the display protective film (400) comprising a main portion (410) extending along a plane of the flexible display panel and a pair of protrusions (420) respectively extending from both lateral surfaces of the main portion toward the pair of protective caps.

2. The electronic device of claim 1, wherein the protrusion has a width (L1) exceeding a width (W1) of the bending zone in a second direction perpendicular to the first direction.

3. The electronic device of claim 1 or 2, wherein a dent region (430) that is recessed toward the main portion in the first direction is further disposed in the protrusion.

4. The electronic device of any one of claims 1 through 3, wherein

   the protrusion comprises a first region (421) extending in a second direction perpendicular to the first direction and a pair of second regions (422) arranged on both ends of the first region to connect the ends of the first region to the main portion, and
   the second region is disposed outside the bending zone in the second direction.

5. The electronic device of claim 3, further comprising:

   a first decorative member (510) arranged along a periphery of the flexible display panel arranged on the first housing;
   a second decorative member (520) arranged along the periphery of the flexible display panel arranged on the second housing; and
   a pair of dust cover members (700) arranged on an edge of the flexible display panel and connecting the first decorative member to the second decorative member.

6. The electronic device of claim 5, wherein the protrusion is spaced apart from the dust cover member at a lowest portion (O) of the dent region by at least a predetermined gap (g1).

7. The electronic device of claim 5 or 6, wherein

   the dent region has a predetermined open angle

(a) toward the dust cover member, and
a first edge 751 adjacent to the protrusion of the dust cover member has a shape corresponding to a shape of the dent region.

8. The electronic device of any one of claims 5 through 7, further comprising
a concave portion (722) disposed on the dust cover member, the concave portion (722) comprising a lowermost portion (Oi) disposed on the folding line (FL) and having a predetermined open angle (a).

9. The electronic device of claim 8, wherein
the dust cover member comprises a first member (710) facing the protective cap and a second member (720) disposed below the first member and facing a periphery of the flexible display panel.

10. The electronic device of claim 9, wherein

the concave portion is arranged in the second member, and
the second member has a thickness (t2) greater than a thickness (t1) of the display protective film.

11. The electronic device of any one of claims 8 through 10, wherein
a distance between the lowest portion (O) of the dent region and the lowest portion (Oi) of the concave portion is a predetermined interval (g1).

12. The electronic device of claim 5, wherein
the dust cover member comprises:

a bending portion (750) extending in one direction;
a first fixing portion (730) and a second fixing portion (740) respectively arranged on both ends of the bending portion;
a first guide hole (731) located in the first fixing portion and into which a first guide protrusion 511 disposed on the first decorative member is inserted; and
a second guide hole (741) located in the second fixing portion and into which a second guide protrusion 521 disposed on the second decorative member is inserted.

13. The electronic device of claim 12, wherein,
when the first housing pivots about an axis to be adjacent to the second housing, the dust cover member is tilted, based on an axis passing through the first guide hole and the second guide hole, by a predetermined inclination angle (β) toward the display protective film such that the dust cover member does not come into contact with the display protective film.

14. The electronic device of claim 13, wherein

the predetermined inclination angle (β) is determined according to Equation (1) below:

[Equation 1]

$$\cos(\beta) = \frac{h1}{h} = \frac{(h-T)}{h}$$

(h is a length of the dust cover member in a third direction perpendicular to the first direction, when the first housing pivots about the one axis to be adjacent to the second housing and the dust cover member is not tilted, and
h1 is a length of the dust cover member in the third direction, when the first housing pivots about the one axis to be adjacent to the second housing and the dust cover member is tilted).

15. The electronic device of claim 7, wherein

the predetermined interval (g1) is determined according to Equation (2) below:

[Equation 2]

$$g1 = h\sin(\beta)$$

(h is a length of the dust cover member in a third direction perpendicular to the first direction, when the first housing pivots about the one axis to be adjacent to the second housing and the dust cover member is not tilted, and
h1 is a length of the dust cover member in the third direction, when the first housing pivots about the one axis to be adjacent to the second housing and the dust cover member is tilted).

FIG. 1

10

z
y
x

# FIG. 2

## FIG. 3A

## FIG. 3B

# FIG. 4

FIG. 5

# FIG. 6A

# FIG. 6B

# FIG. 7

# FIG. 8

# FIG. 9

FIG. 10

# FIG. 11

# FIG. 12A

# FIG. 12B

# FIG. 12C

FIG. 13A

# FIG. 13B

# FIG. 13C

# FIG. 14

EP 4 664 237 A1

# FIG. 15A

# FIG. 15B

# FIG. 16

# FIG. 17A

# FIG. 17B

FIG. 18

# FIG. 19

# FIG. 20

# FIG. 21

EP 4 664 237 A1

# FIG. 22

## INTERNATIONAL SEARCH REPORT

| International application No. |
| --- |
| **PCT/KR2024/002317** |

| A. | CLASSIFICATION OF SUBJECT MATTER |
| --- | --- |

**G06F 1/16**(2006.01)i; **H04M 1/02**(2006.01)i; **G09F 9/30**(2006.01)i

According to International Patent Classification (IPC) or to both national classification and IPC

| B. | FIELDS SEARCHED |
| --- | --- |

Minimum documentation searched (classification system followed by classification symbols)

G06F 1/16(2006.01); A45C 11/00(2006.01); G09F 9/00(2006.01); G09F 9/30(2006.01); H01L 51/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1 하우징(first housing), 제2 하우징(second housing), 힌지 (hinge), 플렉서블 디스플레이 패널(flexible display panel), 보호 캡(protection cap), 보호 필름(protection film), 돌출(emboss)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0045899 A (SAMSUNG ELECTRONICS CO., LTD.) 05 April 2023 (2023-04-05)<br>See paragraphs [0021]-[0083]; and figures 1a-11. | 1-15 |
| A | KR 10-2022-0021936 A (SAMSUNG DISPLAY CO., LTD.) 23 February 2022 (2022-02-23)<br>See paragraphs [0068]-[0146]; and figures 5-21. | 1-15 |
| A | KR 10-2016-0083318 A (LG DISPLAY CO., LTD.) 12 July 2016 (2016-07-12)<br>See paragraphs [0018]-[0057]; and figures 1-3. | 1-15 |
| A | KR 10-2014-0139648 A (SAMSUNG ELECTRONICS CO., LTD.) 08 December 2014 (2014-12-08)<br>See paragraphs [0023]-[0046]; and figures 1-9. | 1-15 |
| A | CN 112531124 A (BEIJING XIAOMI MOBILE SOFTWARE CO., LTD.) 19 March 2021 (2021-03-19)<br>See paragraphs [0072]-[0089]; and figures 10-12. | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 May 2024** | **28 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002317**

| Patent document cited in search report | | | Publication date (day/month/year) | Patent family member(s) | | | Publication date (day/month/year) |
|---|---|---|---|---|---|---|---|
| KR | 10-2023-0045899 | A | 05 April 2023 | WO | 2023-054927 | A1 | 06 April 2023 |
| KR | 10-2022-0021936 | A | 23 February 2022 | CN | 114078376 | A | 22 February 2022 |
| | | | | US | 2022-0052282 | A1 | 17 February 2022 |
| KR | 10-2016-0083318 | A | 12 July 2016 | CN | 106205384 | A | 07 December 2016 |
| | | | | CN | 106205384 | B | 25 December 2018 |
| | | | | KR | 10-2333557 | B1 | 01 December 2021 |
| | | | | US | 9204565 | B1 | 01 December 2015 |
| KR | 10-2014-0139648 | A | 08 December 2014 | US | 2014-0346936 | A1 | 27 November 2014 |
| CN | 112531124 | A | 19 March 2021 | EP | 3796626 | A1 | 24 March 2021 |
| | | | | EP | 3796626 | B1 | 03 April 2024 |
| | | | | US | 10964918 | B1 | 30 March 2021 |
| | | | | US | 2021-0091341 | A1 | 25 March 2021 |

Form PCT/ISA/210 (patent family annex) (July 2022)